# FASCICULE DE BREVET EUROPEEN

(11) **EP 3 693 593 B1**
(45) Date de publication et mention de la délivrance du brevet: **22.12.2021**
(21) Numéro de dépôt: 20152710.8
(22) Date de dépôt: 20.01.2020
(51) Int. Cl.: F02K 1/72

(54) **TURBORÉACTEUR COMPORTANT UN MÉCANISME D'ENTRAINEMENT D'UN INVERSEUR DE POUSSÉE**
TURBOTRIEBWERK, DAS EINEN ANTRIEBSMECHANISMUS EINES SCHUBUMKEHRSYSTEMS UMFASST
TURBOJET COMPRISING A MECHANISM FOR DRIVING A THRUST INVERSER

(30) Priorité: 07.02.2019 FR 1901222
(43) Date de publication de la demande: 12.08.2020
(73) Titulaire: AIRBUS OPERATIONS (S.A.S.), 31060 Toulouse (FR)
(72) Inventeur: CAZEAUX, Laurent, 31060 TOULOUSE Cedex 9 (FR); MENOU, Fabien, 31060 TOULOUSE Cedex 9 (FR); ORTEU, Benoit, 31060 TOULOUSE Cedex 9 (FR)
(74) Mandataire: Gicquel, Olivier Yves Gérard

(56) Documents cités:
- EP-A1- 3 176 415
- DE-A1-102013 206 595
- FR-A- 1 544 066
- US-A1- 2017 328 304

## Description

La présente invention concerne un turboréacteur à double flux qui comporte un inverseur de poussée et un mécanisme d'entrainement dudit inverseur.

Un turboréacteur double flux comporte un nacelle entourant un moteur avec une soufflante pour définir un conduit de soufflante qui permet le passage d'un flux d'air expulsé conséquemment à la rotation de la soufflante.

Le turboréacteur comporte un inverseur de poussée situé à l'arrière de la nacelle et qui comprend un capot mobile, une pluralité de portes bloquantes et un mécanisme d'entrainement de l'inverseur de poussée. Le capot mobile est mobile en translation, sous l'effet du mécanisme d'entrainement, entre une position arrimée dans laquelle il est au contact d'un capot fixe de la nacelle pour assurer une continuité aérodynamique de la nacelle, et une position déployée dans laquelle le capot mobile est éloigné du capot fixe vers l'arrière de la nacelle pour élargir une ouverture entre le conduit de soufflante et l'extérieur de la nacelle.

Chaque porte bloquante, positionnée au niveau de l'ouverture, a un mouvement mécaniquement lié à la translation du capot mobile. Ainsi une porte bloquante est mobile entre une position fermée dans laquelle elle n'obture pas le conduit de soufflante de manière à ne pas faire obstacle au flux d'air lorsque le capot mobile est en position arrimée, et une position ouverte dans laquelle elle est positionnée en travers du conduit de soufflante pour diriger une partie du flux d'air à travers l'ouverture vers l'extérieur de la nacelle lorsque le capot mobile est en position déployée.

Afin d'optimiser les performances du moteur lors de l'activation de l'inverseur de poussée à l'atterrissage, il est souhaitable de trouver des mécanismes de déploiement qui permettent de retarder l'ouverture de la porte bloquante par rapport au déplacement du capot mobile vers sa position déployée.

Il est connu de la demande de brevet EP2776699, un mécanisme de déploiement qui utilise un principe de levier pour l'ouverture de la porte bloquante afin d'assurer un retard de l'ouverture de ladite porte par rapport au déplacement du capot mobile vers sa position déployée.

On connaît également le document DE102013206595 qui décrit le préambule de la revendication 1.

Un objet de la présente invention est de proposer un type de mécanisme diffèrent pour l'ouverture de la porte avec retard. A cet effet, l'invention concerne un turboréacteur tel que revendiqué dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un turboréacteur selon l'invention ;
La figure 2 est une vue en coupe du turboréacteur selon l'invention qui comprend un inverseur de poussée ;
La figure 3 est une vue en coupe d'un inverseur de poussée selon un premier mode de réalisation de l'invention dans un état activé ;
La figure 4 est une vue similaire à celle de la figure 3 de l'inverseur de poussée selon un premier mode de réalisation de l'invention dans un état intermédiaire ;
La figure 5 est une vue similaire à celle de la figure 3 de l'inverseur de poussée selon un premier mode de réalisation de l'invention dans un état désactivé ;
La figure 6 est une vue en coupe d'un rail d'un mécanisme d'entraînement de l'inverseur de poussée selon un mode de réalisation de l'invention ;
La figure 7 est une vue en coupe d'un inverseur de poussée selon un second mode de réalisation de l'invention dans un état activé ;
La figure 8 est une vue similaire à celle de la figure 7 de l'inverseur de poussée selon un second mode de réalisation de l'invention dans un état intermédiaire ;
La figure 9 est une vue similaire à celle de la figure 8 de l'inverseur de poussée selon un second mode de réalisation de l'invention dans un état désactivé.

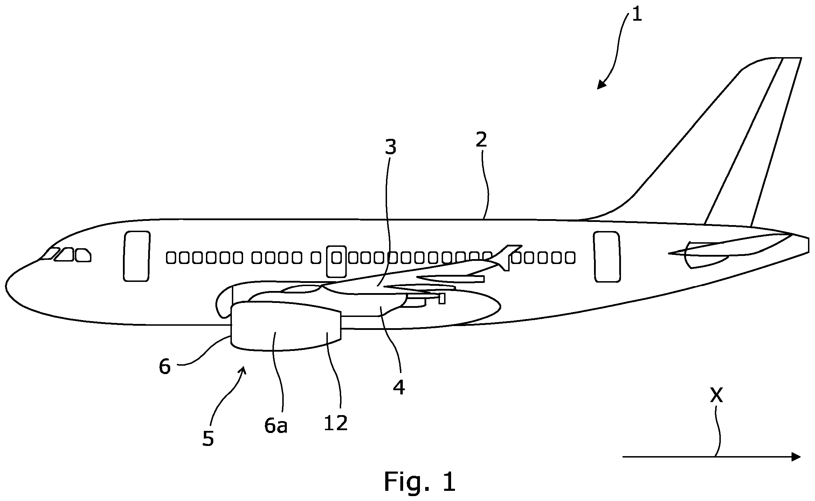

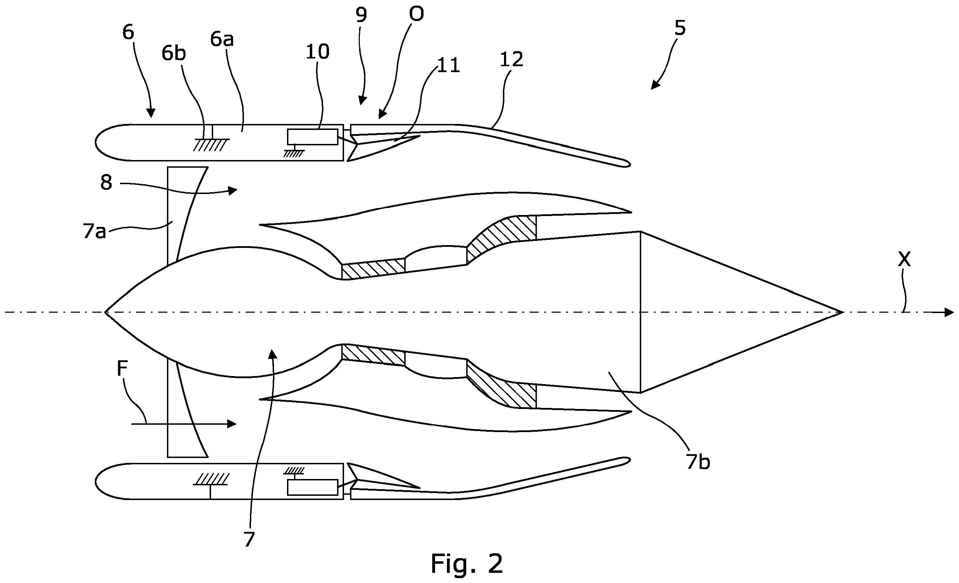

En référence avec les figures 1 et 2, un aéronef 1 comprend un fuselage 2 de chaque côté duquel est arrangée une aile 3 sous laquelle est fixée, via un mât 4 (non représenté sur la figure 2), au moins un turboréacteur 5 double flux selon l'invention. Le turboréacteur 5 comporte une nacelle 6 entourant un moteur 7 (non représenté sur la figure 1) qui comprend, d'avant en arrière de la nacelle 6 selon l'axe longitudinal X de la nacelle, une soufflante 7a puis un corps de moteur 7b configuré pour, en fonctionnement, entrainer la soufflante 7a.

Le turboréacteur 5 comprend, dans le prolongement de la soufflante 7a, un conduit d'air 8, dit conduit de soufflante, défini entre la nacelle 6 et le moteur 7. En fonctionnement du moteur 7, un flux d'air F expulsé par la soufflante 7a circule dans la conduit de soufflante 8 pour être expulsé à l'arrière du turboréacteur 5.

La nacelle 6 comprend en outre un châssis 6b (non représenté sur la figure 1, représenté par le symbole d'une structure fixe sur les figures 2 à 9) formé par des poutres ou autres éléments structuraux et, d'avant en arrière selon la direction d'avancement de l'aéronef 1, un capot fixe 6a monté fixe sur le châssis 6b puis au moins un inverseur de poussée 9 qui comprend des parties mobiles sous l'action d'un mécanisme d'entrainement 10.

Selon l'invention, le mécanisme d'entrainement 10 est configuré pour coordonner le passage de la position fermée à la position ouverte de la porte bloquante 11 avec le passage de la position arrimée à la position déployée du capot mobile 12 mais également pour différer le passage de la position fermée à la position ouverte de la porte bloquante 11 par rapport au passage de la position arrimée à la position déployée du capot mobile 12

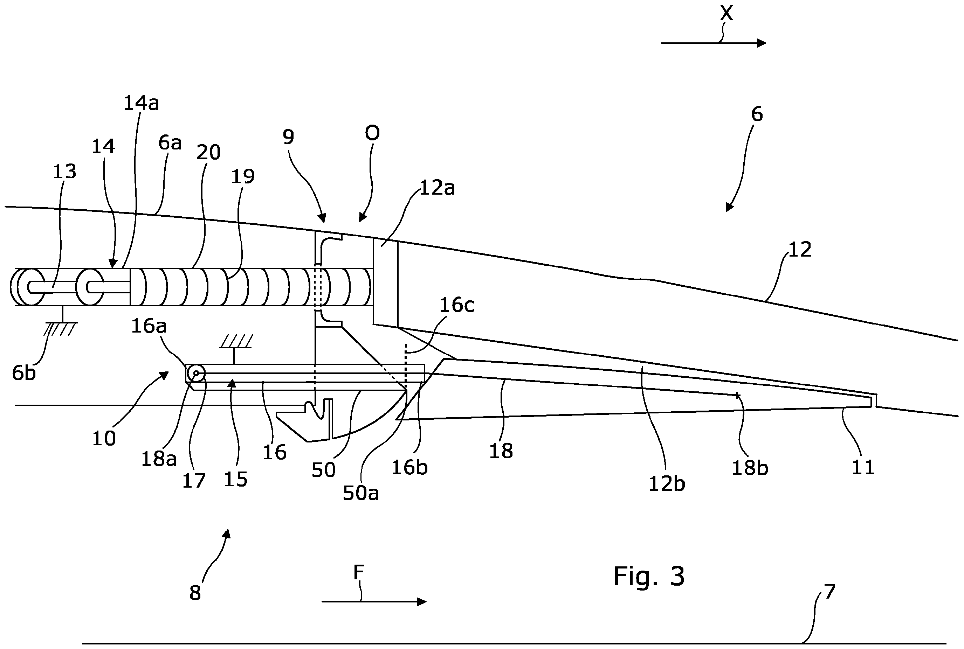

Selon un mode de réalisation de l'invention illustré aux figures 3 à 5, les parties mobiles de l'inverseur de poussée 9 comprennent notamment au moins une porte bloquante 11, un capot mobile 12 et des cascades.

Chacun du capot fixe 6a et du capot mobile 12 présente une surface extérieure qui constitue l'enveloppe extérieure de la nacelle 6 et une surface intérieure qui constitue une paroi extérieure du conduit de soufflante 8. La nacelle 6 présente en outre, pour chaque porte bloquante 11, une ouverture O traversante par laquelle peuvent communiquer le conduit de soufflante 8 et l'extérieur de la nacelle.

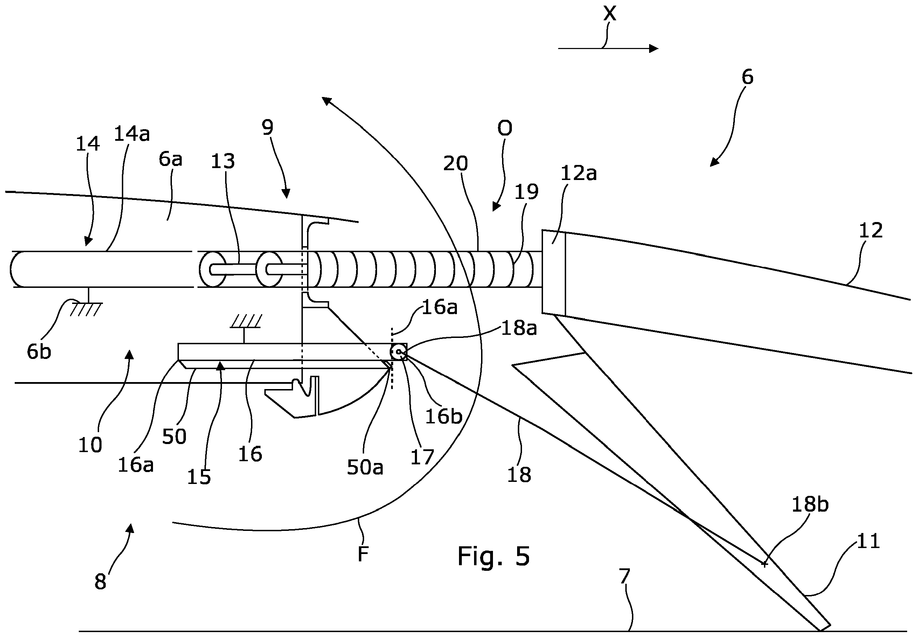

Le capot mobile 12 est monté mobile en translation sur le châssis 6b selon une direction de translation globalement parallèle à l'axe longitudinal X entre une position arrimée (figure 3) dans laquelle il est au contact du capot fixe 6a pour fermer l'ouverture O et une position déployée (figure 5) dans laquelle il est éloigné du capot fixe 6a de manière à élargir l'ouverture O. La translation du capot mobile 12 est réalisée par tous moyens appropriés (non représentés) comme, par exemple, des actionneurs de type vérin électrique ou hydraulique, pour pousser ou tirer sur le capot mobile 12 selon la direction de translation et des glissières arrangés sur les bords latéraux du capot mobile où chaque glissière est formée par une ferrure fixée sur le capot mobile et coulissant dans une rainure arrangée sur la structure fixe.

Chaque porte bloquante 11 est montée mobile sur un cadre avant 12a du capot mobile 12 autour d'un axe de rotation sensiblement perpendiculaire à l'axe longitudinal X, entre une position fermée (figure 3) et une position déployée (figure 5) pour laquelle l'inversion de poussée a une efficacité maximale.

En position fermée, la porte bloquante 11 se positionne en dehors du conduit de soufflante 8, et plus particulièrement, dans le mode de réalisation représenté, vient se loger dans un évidement 12b réalisé au niveau de la surface intérieure du capot mobile 12. En position ouverte, la porte bloquante 11 vient en travers du conduit de soufflante 8 et dévie au moins une partie du flux d'air F vers l'extérieur et vers l'avant de la nacelle à travers l'ouverture O.

Les cascades 19 sont arrangées sur un boitier mobile 20 (cascade box en terminologie anglo-saxonne) par rapport à la structure fixe et qui est solidaire du capot mobile 12. En position déployée du capot mobile 12, les cascades 19 se positionnent en travers de l'ouverture O pour orienter, vers l'avant et l'extérieur de la nacelle, le flux d'air F bloqué par la porte bloquante 11 tandis qu'en position arrimée du capot mobile 12, les cascades sont arrangées en dessous du capot fixe 6a.

Le mécanisme d'entrainement 10 est configuré pour coordonner le passage de la position fermée à la position ouverte de la porte bloquante 11 avec le passage de la position arrimée à la position déployée du capot mobile 12.

Selon l'invention, le mécanisme de déploiement 10 comprend :
- un coulisseau 13 fixé au châssis 20 des cascades;
- des moyens de guidage 14 du coulisseau solidaires du châssis 6b et destinés à guider le coulisseau 13 en translation parallèlement à la direction de translation par rapport au châssis 6b entre deux positions d'arrêt, l'une correspondant à la position arrimée du capot mobile 12 et l'autre à la position déployée du capot mobile 12. Les moyens de guidage 14 prennent, par exemple, la forme d'une rainure 14a solidaire du châssis dans et le long de laquelle coulisse le coulisseau 13. Les extrémités de la rainure 14a sont obturées pour limiter le déplacement du coulisseau 13 entre lesdites extrémités et déterminer ainsi la position des deux positions d'arrêt.
- une glissière à galet 15 solidaire du châssis 6b, la glissière à galet 15 comprenant un rail 16 s'étendant selon la direction de translation et un galet 17 mobile en rotation dans le rail 16 entre une première extrémité 16a du rail 16 atteinte lorsque la porte bloquante 11 est en position fermée et le capot mobile 12 est en position arrimée et une seconde extrémité 16b du rail 16 atteinte lorsque la porte bloquante 11 est en position ouverte et la capot mobile 12 est en position déployée.
- une bielle 18 dont une première extrémité 18a, de préférence l'extrémité avant comme représenté sur les figures 3 à 5, est montée mobile sur le centre du galet 17 autour d'un axe de rotation perpendiculaire à l'axe longitudinal X, et dont une seconde extrémité 18b est monté mobile sur la porte bloquante 11 autour d'un axe de rotation également perpendiculaire à l'axe longitudinal X .

Le rail 16 comprend une surface d'appui 50 s'étendant selon la direction de translation et globalement parallèlement à l'axe longitudinal X pour supporter la bielle 18 durant le déplacement du capot mobile 12 de la position arrimée à une position intermédiaire du capot mobile 12, ladite position intermédiaire étant comprise entre la position arrimée et la position déployée du capot mobile 12.

La surface d'appui 50 s'étend de la première extrémité 16a du rail 16 jusqu'à une position de pivotement 16c atteinte lorsque la capot mobile 12 est en position intermédiaire. La bielle 18 supportée par la surface d'appui 50 est contrainte en translation selon la direction de translation , de sorte que la porte ne peut pas s'ouvrir.

En revanche, à mesurer que la bielle 18 n'est plus supportée par la surface d'appui 50, c'est-à-dire au-delà de la position de pivotement, la bielle 18 est libre de pivoter autour du centre du galet 17 de sorte que la porte peut se déplacer vers sa position ouverte.

De préférence, la surface d'appui 50 présente, au niveau de la position de pivotement 16c, une rampe 50a s'étendant selon la direction de translation et inclinée par rapport à l'axe longitudinal X afin de faciliter l'insertion progressive de la bielle dans le rail 16 ou au contraire de faciliter l'excursion progressive de la bielle 18 hors du rail 16. Le plan de la rampe 50a est incliné, par exemple, d'un angle de l'ordre de 5 à 30° par rapport à l'axe longitudinal X.

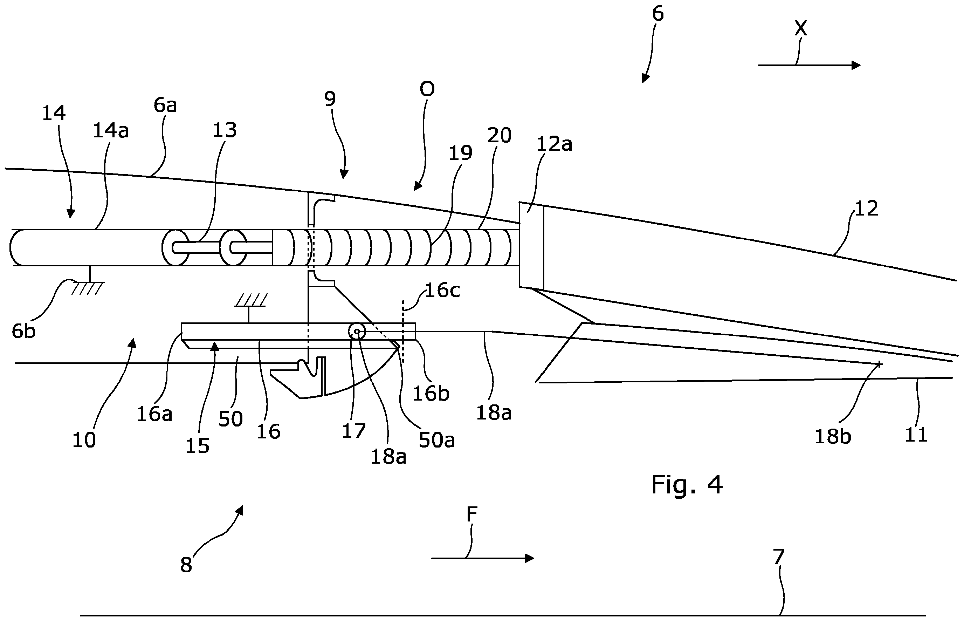

Le fonctionnement de l'inverseur de poussée 9 sous l'effet du mécanisme d'entrainement 10 est le suivant, à partir de la position arrimée du capot mobile 12 et fermée de la porte bloquante 11 (figure 3):
- l'actionneur est activé pour provoquer un déplacement en translation du coulisseau 13 guidé par les moyens de guidage 14 le long de la structure fixe pour déplacer l'ensemble capot mobile-porte bloquante-cascades vers l'arrière de la nacelle 6. Ainsi le capot mobile 12 se déplace de sa position arrimée vers la position déployée. Simultanément à ce déplacement (figure 4), la bielle 18 solidaire de la porte bloquante 11 translate dans le rail 16, en étant supportée par la surface d'appui 50, et tire sur le galet 17 qui roule dans le rail 16 et se déplace de la première extrémité 16a vers la seconde extrémité 16b du rail ;et
- à partir du moment où le capot mobile 12 dépasse la position intermédiaire, et à mesure que la bielle 18 n'est plus supportée par la surface d'appui 50, la bielle 18 tourne progressivement autour du centre du galet 17 pour déplacer la porte bloquante 11 vers sa position ouverte afin d'obturer au moins une partie du conduit de soufflante 8. L'inverseur de poussée 9 est alors dit activé (figure 5) et son efficacité est maximale lorsque la porte bloquante 11 est en position ouverte.

Le fonctionnement de l'inverseur de poussée 9 sous l'effet du mécanisme d'entrainement 10 est le suivant, à partir de la position déployée du capot mobile 12 et ouverte de la porte bloquante 11 (figure 5):
- l'actionneur est activé pour provoquer un déplacement en translation du coulisseau 13 guidé par les moyens de guidage 14 le long de la structure fixe pour déplacer l'ensemble capot mobile-porte bloquante-cascades vers l'avant de la nacelle 6. Ainsi le capot mobile 12 se déplace de sa position arrimée vers la position déployée et se rapproche du capot fixe 6a pour refermer l'ouverture O;
- à mesure que le capot mobile 12 se déplace vers l'avant (figure 4) et dépasse la position intermédiaire, en déplaçant la porte bloquante 11 vers l'avant, la bielle 18 qui a son extrémité 18a contrainte par sa liaison avec le galet 17 qui roule dans la rail 16 est supportée progressivement par la surface d'appui 50 ce qui provoque le passage progressif de la porte bloquante 11 vers sa position fermée afin de libérer le conduit de soufflante 8. Le déplacement de la bielle 18 dans le rail 16 pousse le galet 17 vers la première extrémité 16a du rail atteinte lorsque la porte bloquante 11 est dans sa position fermée. Dans la position fermée de la porte bloquante 11, l'inverseur de poussée 9 est dit désactivé.

Ainsi, le mécanisme d'entrainement 10 selon l'invention diffère le passage de la position fermée à la position ouverte de la porte bloquante 11 par rapport au passage de la position arrimée à la position déployée du capot mobile 12 puisque la porte bloquante 11 ne commence à se déplacer vers sa position ouverte qu'à partir du moment où le capot mobile 12 a dépassé sa position intermédiaire. Un tel mécanisme d'entraînement 10 présente en outre l'avantage d'être entièrement hors du conduit de soufflante 8, lorsque le capot mobile 12 est en position arrimée et lorsque la porte bloquante 11 est en position fermée, de sorte à ne pas générer de traînée parasite.

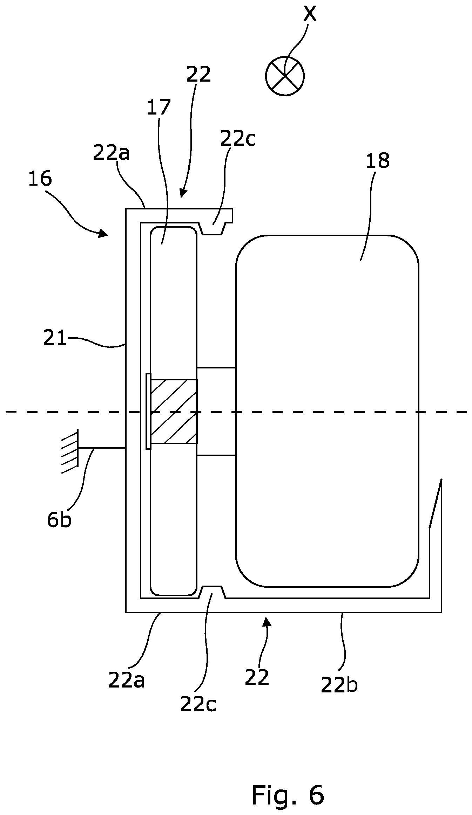

Dans un exemple de réalisation illustré à la figure 6, le rail 16, par exemple une tôle pliée, a classiquement une forme de U avec une base 21 fixée à la structure fixe et deux volets parallèles 22 entre eux qui s'étendent hors de la base 21 dans une direction dite d'extension, perpendiculaire à l'axe longitudinal X.

Chaque volet 22 comprend, selon la direction d'extension et à partir de la base 21, une première portion 22a. Un première portion 22a s'étend, selon la direction de translation, de la première extrémité 16a à la seconde extrémité 16b du rail 16. Le rail 16 comprend des moyens d'arrêt (non représentés), par exemple des butées, arrangées à chacune de sa première 16a et de sa seconde extrémités 16b pour empêcher toute excursion du galet 17 hors du rail 16.

L'écart entre les premières portions 22a des deux volets 22 opposés d'un rail 16 est légèrement supérieur au diamètre du galet 17 de sorte que le galet 17 peut rouler sur les premières portions 22a.

Chaque première portion 22a se prolonge, selon la direction de translation, par une nervure 22c, par exemple de section de forme trapézoïdale, s'étendant selon la direction de translation et dont le sommet est orienté vers l'intérieur du rail 16 La nervure 22c permet de maintenir le galet 17 entre les premières portions 22a de deux volets 22 opposés.

En outre, le volet 22 situé au plus proche du conduit de soufflante 8, présente selon la direction d'extension et à partir de première portion 22a, une seconde portion 22b sensiblement plane.

La seconde portion 22b s'étend de la première extrémité 16a du rail 16 jusqu'à une position de pivotement 16c atteinte lorsque la capot mobile 12 est en position intermédiaire et forme la surface d'appui 50 de la bielle 18. La nervure 22c séparant la première et la seconde portion 22a,22b d'un volet 22 permet d'empêcher la bielle 18 de venir s'insérer entre les premières portions 22a d'un rail 22.

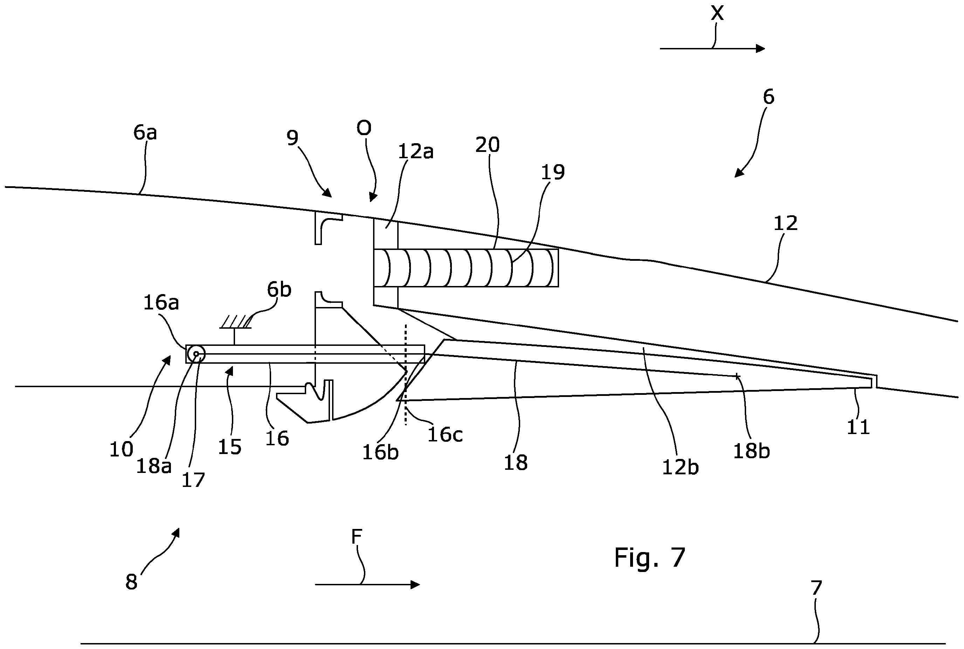

Dans un autre mode de réalisation de l'invention, et tel que représenté sur les figures 7 à 9, le turboréacteur 5 comprend des cascades 19 arrangées sur un boitier 20 solidaire du châssis 6b et qui est logé dans le capot mobile 12, dans l'espace délimité entre la surface extérieure et la surface intérieure du capot mobile 12 lorsque ce dernier est en position arrimée. En position déployée du capot mobile 12, les cascades, arrangées au travers de l'ouverture O, orientent, vers l'avant et l'extérieur de la nacelle, le flux d'air F bloqué par la porte bloquante 11.

Selon ce mode de réalisation, le mécanisme d'entrainement 10 ne comprend pas de coulisseau ni de moyens de guidage du coulisseau. En revanche, l'épaisseur du capot mobile 12 est augmentée pour pouvoir y loger les cascades fixes 19.

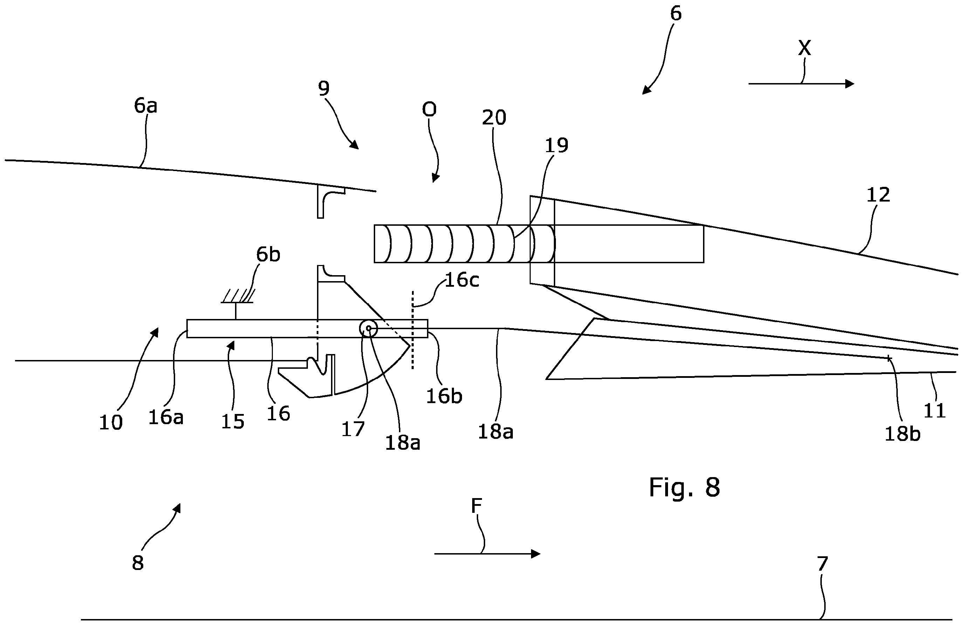

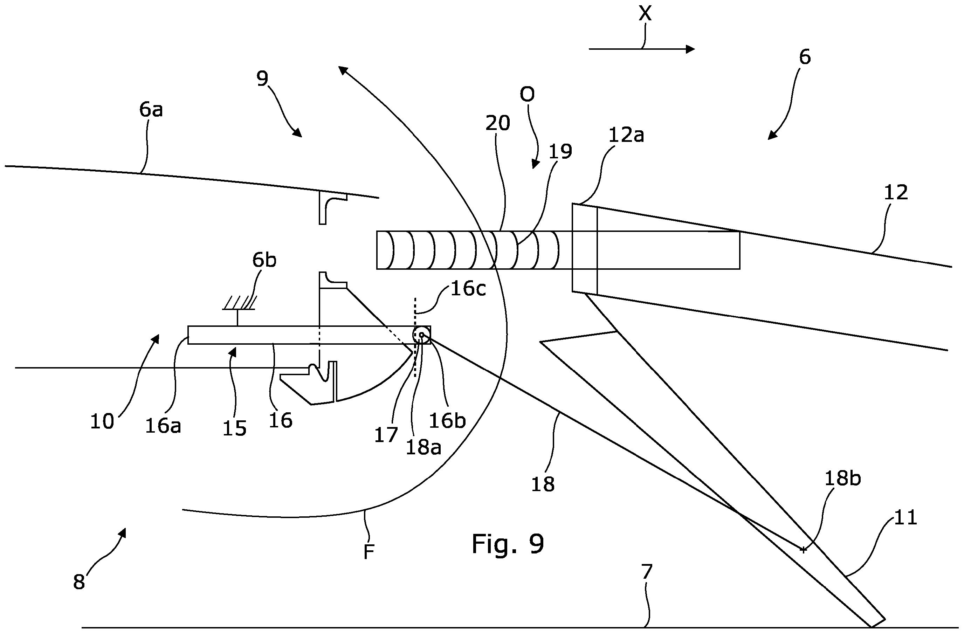

Le fonctionnement de l'inverseur de poussée 9 selon ce mode de réalisation sous l'effet du mécanisme d'entrainement 10 est le suivant, à partir de la position arrimée du capot mobile 12 et fermée de la porte bloquante 11 (figure 7):
- l'actionneur est activé pour provoquer un déplacement en translation de l'ensemble capot mobile-porte bloquante vers l'arrière de la nacelle 6. Ainsi le capot mobile 12 se déplace de sa position arrimée vers la position déployée et le déplacement vers l'arrière du capot mobile 12 libère les cascades 19. Simultanément à ce déplacement (figure 8), la bielle 18 solidaire de la porte bloquante 11 translate dans le rail 16 et tire sur le galet 17 qui roule dans le rail 16 et se déplace de la première extrémité 16a vers la seconde extrémité 16b du rail ;et
- à mesure que la bielle 18 n'est plus supportée par la surface d'appui 50, cette dernière pivote progressivement autour du centre du galet 17 pour déplacer la porte bloquante 11 vers sa position ouverte afin d'obturer au moins une partie du conduit de soufflante 8. Lorsque la porte bloquante 11 atteint sa position ouverte, l'inverseur de poussée 9 est activé (figure 9)

Le fonctionnement de l'inverseur de poussée 9 sous l'effet du mécanisme d'entrainement 10 est le suivant, à partir de la position déployée du capot mobile 12 et ouverte de la porte bloquante 11 (figure 9) :
- l'actionneur est activé pour provoquer un déplacement de l'ensemble capot mobile-porte bloquante vers l'avant de la nacelle 6. Ainsi le capot mobile 12 se déplace de sa position arrimée vers la position déployée et se rapproche du capot fixe 6a pour refermer l'ouverture O. Les cascades 19 viennent se loger dans l'épaisseur du capot mobile 12 à mesure que se dernier progresse vers sa position arrimée.
- à mesure que le capot mobile 12 se déplace vers l'avant (figure 8), en déplaçant la porte bloquante 11 vers l'avant, la bielle 18 qui a son extrémité 18a contrainte par sa liaison avec le galet 17 qui roule dans le rail 16 est progressivement supportée par la surface d'appui 50 ce qui provoque le passage progressif de la porte bloquante 11 vers sa position fermée afin de libérer le conduit de soufflante 8. Le déplacement de la bielle 18 pousse le galet 17 vers la première extrémité 16a du rail atteinte lorsque la porte bloquante 11 est dans sa position fermée. Lorsque la porte bloquante 11 atteint sa position fermée, l'inverseur de poussée 9 est désactivé (figure 7).

L'invention a été décrite pour une seule porte bloquante, mais elle s'applique de la même manière pour chaque porte bloquante ou ensemble de portes bloquantes lorsqu'il y en a plusieurs.

## Revendications

1. Turboréacteur (5) comprenant un moteur (7), une nacelle (6) avec une axe longitudinal (X) et un conduit de soufflante (8) défini entre la nacelle (6) et le moteur (7), la nacelle (6) ayant un châssis (6b), un capot fixe (6a) et un inverseur de poussée (9) montés sur le châssis (6b), ledit inverseur comprenant un capot mobile (12) monté mobile sur le châssis (6b) en translation selon une direction de translation entre une position arrimée dans laquelle ledit capot est au contact du capot fixe (6a) et une position déployée dans laquelle le capot mobile (12) est éloigné du capot fixe (6a), au moins une porte bloquante (11) mobile en rotation autour d'un axe perpendiculaire à l'axe longitudinal (X) sur le capot mobile (12) entre une position fermée dans laquelle ladite porte libère le conduit de soufflante (8) et une position ouverte dans laquelle ladite porte obture au moins en partie le conduit de soufflante (8), ainsi qu'un mécanisme d'entrainement (10) pour déplacer le capot mobile (12) et la au moins une porte bloquante (11), le mécanisme d'entrainement (10) comprenant :
une glissière à galet (15) solidaire du châssis (6b) et comprenant un rail (16) s'étendant selon la direction de translation et un galet (17) mobile en rotation dans le rail (16) sur la longueur totale du rail définie entre une première extrémité (16a) du rail atteinte lorsque la porte bloquante (11) est en position fermée et le capot mobile (12) est en position arrimée et une seconde extrémité (16b) du rail atteinte lorsque la porte bloquante (11) est en position ouverte et le capot mobile (12) en position déployée,
une bielle (18) dont une première extrémité (18a) est montée mobile en rotation sur le galet (17) autour d'un axe de rotation perpendiculaire à l'axe longitudinal (X), et dont une seconde extrémité (18b) est montée mobile sur la au moins une porte bloquante (11) autour d'un axe de rotation perpendiculaire à l'axe longitudinal (X),
**caractérisé en ce que** le rail (16) comprend une surface d'appui (50) s'étendant selon la direction de translation et parallèlement à l'axe longitudinal (X) pour supporter la bielle (18) durant le déplacement du capot mobile (12) de la position arrimée à une position intermédiaire du capot mobile (12), ladite position intermédiaire étant comprise entre la position arrimée et la position déployée du capot mobile (12).

2. Turboréacteur (5) selon la revendication 1, **caractérisé en ce que** la surface d'appui (50) s'étend de la première extrémité (18a) du rail (16) jusqu'à une position de pivotement (16c) atteinte lorsque la capot mobile (12) est en position intermédiaire.

3. Turboréacteur (5) selon l'une quelconque des revendications 1 à 2, **caractérisé en ce qu'**il comporte des cascades (19).

4. Turboréacteur (5) selon la revendication 3, **caractérisé en ce que** les cascades (19) sont arrangées sur un boitier (20) solidaire du capot mobile (12), le mécanisme d'entrainement (10) comprenant un coulisseau (13) solidaire du boitier (20) et des moyens de guidage (14) configurés pour guider le coulisseau (13) en translation parallèlement à la direction de translation entre deux positions d'arrêt, l'une correspondant à la position arrimée et l'autre à la position déployée du capot mobile (12).

5. Turboréacteur (5) selon la revendication 4, **caractérisé en ce que** les moyens de guidage (14) comprennent une rainure (14a) solidaire du châssis (6b) dans et le long de laquelle coulisse le coulisseau (13).

6. Turboréacteur (5) selon la revendication 3, **caractérisé en ce que** les cascades (19) sont arrangées sur un boitier (20) solidaire du châssis (6b) de la nacelle.

7. Turboréacteur (5) selon l'une quelconque des revendications 1 à 2, **caractérisé en ce que** la surface d'appui (50) comprend une rampe (50a), s'étendant selon la direction de translation et inclinée par rapport à l'axe longitudinal (X).

## Patentansprüche

1. Turbinenstrahltriebwerk (5), umfassend einen Motor (7), eine Gondel (6) mit einer Längsachse (X) und einen zwischen der Gondel (6) und dem Motor (7) definierten Gebläsekanal (8), wobei die Gondel (6) ein Gestell (6b), eine feste Abdeckung (6a) und eine Schubumkehreinrichtung (9), die am Gestell (6b) montiert sind, umfasst, wobei die Umkehreinrichtung eine bewegliche Abdeckung (12) umfasst, die so am Gestell (6b) montiert ist, dass sie in einer Translationsrichtung zwischen einer verstauten Position, in der die Abdeckung mit der festen Abdeckung (6a) in Kontakt steht, und einer ausgefahrenen Position, in der die bewegliche Abdeckung (12) von der festen Abdeckung (6a) entfernt ist, translatorisch bewegbar ist, zumindest eine Sperrtür (11), die um eine zur Längsachse (X) senkrechte Achse an der beweglichen Abdeckung (12) zwischen einer geschlossenen Position, in der die Tür den Gebläsekanal (8) freigibt, und einer offenen Position, in der die Tür den Gebläsekanal (8) zumindest teilweise verschließt, drehbar ist, sowie einen Antriebsmechanismus (10) zum Bewegen der beweglichen Abdeckung (12) und der zumindest einen Sperrtür (11), wobei der Antriebsmechanismus (10) Folgendes umfasst:
eine fest mit dem Gestell (6b) verbundene Rollbahn (15), umfassend eine Schiene (16), die sich in der Translationsrichtung erstreckt, und eine Rolle (17), die in der Schiene (16) über die gesamte Länge der Schiene drehbar ist, die zwischen einem ersten Ende (16a) der Schiene, das erreicht wird, wenn sich die Sperrtür (11) in der geschlossenen Position befindet und sich die bewegliche Abdeckung (12) in der verstauten Position befindet, und einem zweiten Ende (16b) der Schiene, das erreicht wird, wenn sich die Sperrtür (11) in der offenen Position befindet und sich die bewegliche Abdeckung (12) in der ausgefahrenen Position befindet, definiert ist,
eine Pleuelstange (18), deren erstes Ende (18a) an der Rolle (17) um eine zur Längsachse (X) senkrechte Drehachse drehbar montiert ist, und deren zweites Ende (18b) an der zumindest einen Sperrtür (11) um eine zur Längsachse (X) senkrechte Drehachse montiert ist,
**dadurch gekennzeichnet, dass** die Schiene (16) eine Auflagefläche (50) umfasst, die sich in der Translationsrichtung und parallel zur Längsachse (X) erstreckt, um die Pleuelstange (18) während der Bewegung der beweglichen Abdeckung (12) von der verstauten Position in eine Zwischenposition der beweglichen Abdeckung (12) zu stützen, wobei die Zwischenposition zwischen der verstauten Position und der ausgefahrenen Position der beweglichen Abdeckung (12) liegt.

2. Turbinenstrahltriebwerk (5) nach Anspruch 1, **dadurch gekennzeichnet, dass** sich die Auflagefläche (50) vom ersten Ende (18a) der Schiene (16) bis zu einer Schwenkposition (16c) erstreckt, die erreicht wird, wenn sich die bewegliche Abdeckung (12) in der Zwischenposition befindet.

3. Turbinenstrahltriebwerk (5) nach einem der Ansprüche 1 bis 2, **dadurch gekennzeichnet, dass** es Kaskaden (19) umfasst.

4. Turbinenstrahltriebwerk (5) nach Anspruch 3, **dadurch gekennzeichnet, dass** die Kaskaden (19) an einem fest mit der beweglichen Abdeckung (12) verbundenen Gehäuse (20) angeordnet sind, wobei der Antriebsmechanismus (10) einen fest mit dem Gehäuse (20) verbundenen Läufer (13) und Führungsmittel (14) umfasst, die konfiguriert sind, um den Läufer (13) translatorisch parallel zur Translationsrichtung zwischen zwei Anschlagpositionen zu führen, wovon eine der verstauten Position und die andere der ausgefahrenen Position der beweglichen Abdeckung (12) entspricht.

5. Turbinenstrahltriebwerk (5) nach Anspruch 4, **dadurch gekennzeichnet, dass** die Führungsmittel (14) eine fest mit dem Gestell (6b) verbundene Rille (14a) umfassen, in der und entlang derer der Läufer (13) gleitet.

6. Turbinenstrahltriebwerk (5) nach Anspruch 3, **dadurch gekennzeichnet, dass** die Kaskaden (19) an einem fest mit dem Gestell (6b) der Gondel verbundenen Gehäuse (20) angeordnet sind.

7. Turbinenstrahltriebwerk (5) nach einem der Ansprüche 1 bis 2, **dadurch gekennzeichnet, dass** die Auflagefläche (50) eine Rampe (50a) aufweist, die sich in der Translationsrichtung erstreckt und relativ zur Längsachse (X) geneigt ist.

## Claims

1. Turbojet (5) comprising an engine (7), a nacelle (6) with a longitudinal axis (X) and a fan duct (8) defined between the nacelle (6) and the engine (7), the nacelle (6) having a chassis (6b), a fixed cowl (6a) and a thrust reverser (9) mounted on the chassis (6b), said reverser comprising a movable cowl (12) mounted to move on the chassis (6b) in translation in a translational direction between a stowed position, in which said cowl is in contact with the fixed cowl (6a), and a deployed position in which the movable cowl (12) is remote from the fixed cowl (6a), at least one blocking flap (11) that is movable in rotation about an axis perpendicular to the longitudinal axis (X) on the movable cowl (12) between a closed position, in which said flap releases the fan duct (8), and an open position in which said flap blocks the fan duct (8) at least in part, and also a drive mechanism (10) for moving the movable cowl (12) and the at least one blocking flap (11), the drive mechanism (10) comprising:
a roller slide (15) integral with the chassis (6b) and comprising a rail (16) extending in the translational direction and a roller (17) that can move in rotation in the rail (16) over the total length of the rail defined between a first end (16a) of the rail attained when the blocking flap (11) is in the closed position and the movable cowl (12) is in the stowed position and a second end (16b) of the rail attained when the blocking flap (11) is in the open position and the movable cowl (12) is in the deployed position,
a connecting rod (18), of which a first end (18a) is mounted to move in rotation on the roller (17) about an axis of rotation perpendicular to the longitudinal axis (X) and of which a second end (18b) is mounted to move on the at least one blocking flap (11) about an axis of rotation perpendicular to the longitudinal axis (X), **characterized in that** the rail (16) comprises a bearing surface (50) extending in the translational direction and parallel to the longitudinal axis (X) such as to support the connecting rod (18) during the movement of the movable cowl (12) from the stowed position to an intermediate position of the movable cowl (12), said intermediate position being between the stowed position and the deployed position of the movable cowl (12).

2. Turbojet (5) according to Claim 1, **characterized in that** the bearing surface (50) extends from the first end (18a) of the rail (16) as far as a pivot position (16c) attained when the movable cowl (12) is in the intermediate position.

3. Turbojet (5) according to either of Claims 1 and 2, **characterized in that** it comprises cascades (19) .

4. Turbojet (5) according to Claim 3, **characterized in that** the cascades (19) are arranged on a housing (20) integral with the movable cowl (12), the drive mechanism (10) comprising a slide bar (13) integral with the housing (20) and guide means (14) configured such as to guide the slide bar (13) in translation parallel to the direction of translation between two stop positions, one corresponding to the stowed position and the other to the deployed position of the movable cowl (12) .

5. Turbojet (5) according to Claim 4, **characterized in that** the guide means (14) comprise a groove (14a) integral with the chassis (6b) in and along which the slide bar (13) slides.

6. Turbojet (5) according to Claim 3, **characterized in that** the cascades (19) are arranged on a housing (20) integral with the chassis (6b) of the nacelle.

7. Turbojet (5) according to either of Claims 1 and 2, **characterized in that** the bearing surface (50) comprises a ramp (50a) extending in the translational direction and inclined relative to the longitudinal axis (X) .
